# EUROPEAN PATENT APPLICATION

(11) **EP 4 675 966 A1**
(43) Date of publication of application: **07.01.2026**
(21) Application number: 24784122.4
(22) Date of filing: 26.03.2024
(51) Int. Cl.: H04L 5/00

(54) **COMMUNICATION METHOD, COMMUNICATION APPARATUS, STORAGE MEDIUM, AND PROGRAM PRODUCT**

(30) Priority: 07.04.2023 CN 202310405680
(71) Applicant: HUAWEI TECHNOLOGIES CO., LTD., Shenzhen, Guangdong 518129 (CN)
(72) Inventor: HOU, Hailong, Shenzhen, Guangdong 518129 (CN); GUO, Zhiheng, Shenzhen, Guangdong 518129 (CN); LU, Shaozhong, Shenzhen, Guangdong 518129 (CN); XIE, Xinqian, Shenzhen, Guangdong 518129 (CN); SONG, Xinghua, Shenzhen, Guangdong 518129 (CN)
(74) Representative: Pfenning, Meinig & Partner mbB
(86) International application number: PCT/CN2024/083926
(87) International publication number: WO 2024/208037

(57) **Abstract**

This application provides a communication method, a communication apparatus, a storage medium, and a program product, and may be applied to the field of 5G new radio technologies. A specific time interval is set between two transmissions with different sub-band duplex modes, so that the two transmissions can be normally performed when a configuration is changed. This improves transmission efficiency.

## Description

This application claims priority to Chinese Patent Application No. 202310405680.4, filed with the China National Intellectual Property Administration on April 7, 2023 and entitled "COMMUNICATION METHOD, COMMUNICATION APPARATUS, STORAGE MEDIUM, AND PROGRAM PRODUCT", which is incorporated herein by reference in its entirety.

### TECHNICAL FIELD

This application relates to the communication field, and in particular, to a communication method, a communication apparatus, a storage medium, and a program product.

### BACKGROUND

To address problems of uplink coverage and delay in time division duplex (time division duplexing, TDD) systems, a technical solution of "sub-band full-duplex (sub-band full-duplex, SBFD) on a network device side and half-duplex on a terminal device (user equipment, UE) side" is proposed in a 5G new radio (new radio, NR) wireless communication system. Sub-band full-duplex means that both sending and receiving are performed on one symbol. Half-duplex means that only receiving or sending can be performed on one symbol.

Examples of scenarios in which SBFD is used in communication systems are as follows: A communication device performs two consecutive transmissions, where SBFD is used in one transmission, and SBFD is not used in the other transmission; or a communication device performs two consecutive transmissions, where SBFD is used in the two transmissions, but sub-bands of SBFD in the two transmissions are different.

Although it is proposed that SBFD may be applied, how to specifically apply SBFD is not further proposed in the communication field.

### SUMMARY

This application provides a communication method, a communication apparatus, a storage medium, and a program product. A specific time interval is set between two transmissions, so that the two transmissions can be normally performed when a configuration is changed. This improves transmission efficiency, for example, reduces data transmission interruption, and implements a complete data transmission.

According to a first aspect, a communication method is provided. The method may be applied to a terminal device or a network device, or may be applied to a chip in a terminal device or a network device. The method includes: performing a first transmission in a first time period; and performing a second transmission in a second time period, where the first transmission and the second transmission are performed on a same carrier of a same cell, a time interval between the first time period and the second time period is greater than or equal to a first duration threshold, and a configuration of a sub-band duplex mode in the first time period is different from a configuration of a sub-band duplex mode in the second time period.

The first transmission and the second transmission are uplink transmissions, the first transmission and the second transmission are downlink transmissions, or the first transmission is an uplink transmission and the second transmission is a downlink transmission. This is not limited in this application.

The sub-band duplex mode may be a sub-band full-duplex mode.

The first transmission may be from a terminal device or a network device. The second transmission may be from the terminal device or the network device. This is not limited in this application.

The same cell may be a cellular cell, and is an area covered by a base station or a part (a sector antenna) of a base station in a cellular mobile communication system. In this area, a mobile station may reliably communicate with the base station through a radio channel.

The same carrier may be a carrier frequency/bandwidth allocated to a cell.

According to the communication method provided in this embodiment, for the first transmission and the second transmission on the same carrier of the same cell, the configuration of the sub-band duplex mode in the first time period is different from the configuration of the sub-band duplex mode in the second time period, that is, a configuration is changed, and the time interval between the first time period and the second time period is set to be greater than or equal to the first duration threshold, that is, there is a specific time interval between the first transmission and the second transmission, so that the two transmissions can be normally performed when the configuration is changed. This can reduce data transmission interruption, implement a complete data transmission, and improve transmission efficiency.

With reference to the first aspect, in some implementations of the first aspect, the sub-band duplex mode is configured for the first time period, and the sub-band duplex mode is not configured for the second time period.

With reference to the first aspect, in some implementations of the first aspect, the sub-band duplex mode is configured for the first time period, the sub-band duplex mode is configured for the second time period, and sub-band information in the sub-band duplex mode in the first time period is different from sub-band information in the sub-band duplex mode in the second time period.

Optionally, the sub-band information includes a start location of a sub-band and/or a bandwidth of the sub-band.

With reference to the first aspect, in some implementations of the first aspect, an active bandwidth part BWP of the first transmission is the same as an active BWP of the second transmission, and the first duration threshold is less than a BWP switch delay.

With reference to the first aspect, in some implementations of the first aspect, an active bandwidth part BWP of the first transmission is different from an active BWP of the second transmission, and the first duration threshold is not less than a BWP switch delay.

Optionally, the first duration threshold is related to a capability of a terminal device, the first duration threshold is configured by a network side device, the first duration threshold is predefined, the first duration threshold is one OFDM symbol, the first duration threshold is two OFDM symbols, the first duration threshold is related to a subcarrier spacing, or the first duration threshold is equal to transition duration between an uplink and a downlink that are of a terminal device that does not support a full-duplex mode.

According to a second aspect, a communication method is provided. The method may be applied to a terminal device or a network device, or may be applied to a chip in a terminal device or a network device. The method includes: performing a first transmission in a first time period; and performing a second transmission in a second time period, where the first transmission and the second transmission are performed on a same carrier of a same cell, a time interval between the first time period and the second time period is less than a first duration threshold, and a configuration of a sub-band duplex mode in the first time period is different from a configuration of a sub-band duplex mode in the second time period; and discarding all or a part of data of the first transmission and/or all or a part of data of the second transmission.

Optionally, total duration of the all or the part of the data of the first transmission that is discarded and/or the all or the part of the data of the second transmission that is discarded does not exceed the first duration threshold.

With reference to the second aspect, in some implementations of the second aspect, the method further includes: determining, based on a transmission priority, to discard the all or the part of data of the first transmission and/or the all or the part of data of the second transmission.

Optionally, a transmission with a higher transmission priority is more preferentially performed, and a transmission with a lower transmission priority is more preferentially discarded.

Optionally, a step of determining the transmission priority includes: a transmission priority of a control channel is higher than a transmission priority of a data channel, where the control channel includes at least one of a PDCCH and a PUCCH, and the data channel includes at least one of a PDSCH and a PUSCH; a transmission priority of a dynamically scheduled channel or signal is higher than a transmission priority of a semi-statically configured channel or signal; a transmission priority of an uplink channel or signal is higher than a transmission priority of a downlink channel or signal; or a transmission priority of a DMRS is higher than a transmission priority of a data part.

With reference to the second aspect, in some implementations of the second aspect, the method further includes: if the discarded data of the first transmission or the second transmission includes the DMRS, discarding the all data of the first transmission or the all data of the second transmission.

With reference to the second aspect, in some implementations of the second aspect, the sub-band duplex mode is configured for the first time period, the sub-band duplex mode is not configured for the second time period, and a transmission priority of the first transmission is higher than a transmission priority of the second transmission.

With reference to the first aspect or the second aspect, in some implementations of the first aspect or the second aspect, both the first transmission and the second transmission are uplink transmissions, both the first transmission and the second transmission are downlink transmissions, or the first transmission is an uplink/downlink transmission and the second transmission is a downlink transmission.

Optionally, the uplink transmission includes a transmission of any one of the following: a PDCCDH, a PDSCH, a CSI-RS, an SSB, and a DMRS, and/or the downlink transmission includes a transmission of any one of the following: a PUCCH, a PUSCH, a PRACH, an SRS, a PTRS, and a DMRS.

According to a third aspect, a communication method is provided. The method may be applied to a terminal device or a network device, or may be applied to a chip in a terminal device or a network device. The method includes: receiving or sending first information, where the first information indicates whether different transmissions of a first channel or signal can be separately performed in a first-type time unit and a second-type time unit, a sub-band duplex mode is configured for the first-type time unit, and the sub-band duplex mode is not configured for the second-type time unit.

In this embodiment, when different duplex modes are configured for the first-type time unit and the second-type time unit, the first information may indicate whether different transmissions can be separately performed in the first-type time unit and the second-type time unit. This flexibly configures a channel or signal, so that the two transmissions are normally performed under an indication of the first information, thereby improving stability and reliability of an information transmission.

Optionally, the first information is carried in DCI, a SIB, RRC signaling, or a MAC CE.

According to a fourth aspect, a communication apparatus is provided. The communication apparatus may be a terminal device or a network device, or may be a chip in a terminal device or a network device. The communication apparatus includes modules configured to perform methods according to the first aspect and the second aspect of this disclosure, for example, a processing module and a transceiver module. The processing module may be a processor, and the transceiver module may be a transceiver. When the apparatus is a terminal device or a network device, the transmitter and the receiver may be radio frequency modules. When the communication apparatus is a chip in a terminal device or a network device, the transmitter and the receiver each may be an input/output interface, a pin, a circuit, or the like.

According to a fifth aspect, a communication apparatus is provided. The communication apparatus may be a terminal device or a network device, or may be a chip in a terminal device or a network device. The communication apparatus includes a processor and a memory. The memory is configured to store a computer program, and the processor is configured to invoke the computer program from the memory and run the computer program, to enable the apparatus to perform the method in any possible implementation of any one of the foregoing aspects.

Optionally, there are one or more processors, and there are one or more memories.

Optionally, the memory may be integrated with the processor, or the memory and the processor are disposed separately.

Optionally, the communication apparatus further includes a transmitter device (transmitter) and a receiver device (receiver). The transmitter and the receiver may be separately disposed, or may be integrated together, and are referred to as a transceiver device (transceiver).

According to a sixth aspect, this application provides a processor, including an input circuit, an output circuit, and a processing circuit. The processing circuit is configured to: receive a signal through the input circuit, and transmit a signal through the output circuit, to enable the processor to perform the method according to any possible implementation of any one of the foregoing aspects.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter. The input circuit and the output circuit may be a same circuit, and the circuit is used as the input circuit and the output circuit at different moments. Specific implementations of the processor and various circuits are not limited in this application.

According to a seventh aspect, a computer-readable storage medium is provided. The computer-readable storage medium stores a computer program (which may also be referred to as code or instructions). When the computer program is run on a computer, the computer is enabled to perform the method in any one of the possible implementations of any one of the foregoing aspects.

According to an eighth aspect, a computer program product is provided. The computer program product includes a computer program (which may also be referred to as code or instructions). When the computer program is run, a computer is enabled to perform the method in any possible implementation of any one of the foregoing aspects.

According to a ninth aspect, a system is provided. The system includes a terminal device and a network device. The terminal device is configured to perform the method in any possible implementation of any one of the foregoing aspects, or the network device is configured to perform the method in any possible implementation of any one of the foregoing aspects.

### BRIEF DESCRIPTION OF DRAWINGS

FIG. 1 is a diagram of a communication system to which embodiments of this application are applicable;
FIG. 2 is a diagram of another communication system to which embodiments of this application are applicable;
FIG. 3 is a schematic flowchart of a communication method according to an embodiment of this application;
FIG. 4 is an example diagram of typical SBFD according to an embodiment of this application;
FIG. 5 is an example diagram of a transmission configured with SBFD and a transmission not configured with SBFD according to an embodiment of this application;
FIG. 6 is an example diagram of SBFD configured with different sub-band information according to an embodiment of this application;
FIG. 7 is another schematic flowchart of a communication method according to an embodiment of this application;
FIG. 8 is an example diagram of a time interval setting according to an embodiment of this application;
FIG. 9 is an example diagram of another time interval setting according to an embodiment of this application;
FIG. 10 is still another schematic flowchart of a communication method according to an embodiment of this application;
FIG. 11 is a block diagram of a communication apparatus according to an embodiment of this application;
FIG. 12 is another block diagram of a communication apparatus according to an embodiment of this application;
FIG. 13 is still another block diagram of a communication apparatus according to an embodiment of this application; and
FIG. 14 is yet another block diagram of a communication apparatus according to an embodiment of this application.

### DESCRIPTION OF EMBODIMENTS

The following describes technical solutions of this application with reference to accompanying drawings.

The technical solutions in embodiments of this application may be applied to various communication systems, for example, a wireless local area network (wireless local area network, WLAN) communication system, a long term evolution (long term evolution, LTE) system, an LTE frequency division duplex (frequency division duplex, FDD) system, an LTE time division duplex (time division duplex, TDD) system, a 5th generation (5th generation, 5G) mobile communication system or a new radio (new radio, NR) system, a worldwide interoperability for microwave access (worldwide interoperability for microwave access, WiMAX) communication system, and another evolved communication system. The 5G system usually includes the following three major application scenarios: enhanced mobile broadband (enhanced mobile broadband, eMBB), ultra-reliable and low-latency communication (ultra-reliable and low-latency communication, URLLC), and massive machine type communication (massive machine type of communication, mMTC).

Currently, a 5G new radio (new radio, NR) system may include a network device and a terminal device.

To implement a transmission between the network device and the terminal device, the network device may further configure a bandwidth part (bandwidth part, BWP) of the terminal device, and may complete a transmission with the terminal device through the configured bandwidth part. Each BWP may include resource blocks (resource block, RB) that are consecutive in frequency, and one RB includes 12 subcarriers (Subcarrier). The network device may configure a maximum of four BWPs for one terminal device, and dynamic adjustment between the network device and the terminal device may be performed within frequency resource ranges corresponding to the configured BWPs. However, a transmission between the network device and the terminal device can be performed through only one BWP, that is, a frequency resource used by the terminal device for each transmission can only fall within a frequency resource range corresponding to one BWP. The BWP through which a corresponding transmission is performed may be referred to as an active BWP, and a process in which the active BWP changes may be referred to as BWP switch (switch).

The terminal device in embodiments of this application may also be referred to as user equipment (user equipment, UE), a mobile station (mobile station, MS), a mobile terminal (mobile terminal, MT), an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides voice/data connectivity for users, for example, a handheld device or a vehicle-mounted device that has a wireless connection function. Currently, the terminal may be, for example, a vehicle, a mobile phone (mobile phone), a tablet computer, a notebook computer, a handheld computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, an uncrewed aerial vehicle, a terminal device in a 5G network, a terminal device in a future evolved public land mobile network (public land mobile network, PLMN), and the like. This is not limited in embodiments of this application.

In addition, in embodiments of this application, the terminal device may alternatively be a terminal device in an internet of things (internet of things, IoT) system. An IoT is an important part of future development of information technologies, and a main technical feature of the IoT is to connect things to a network by using a communication technology, to implement an intelligent network for human-machine interconnection or thing-thing interconnection.

In addition, a network device in embodiments of this application may be a device configured to communicate with the terminal device. The network device may also be referred to as an access network device or a radio access network device, may be a transmission reception point (transmission reception point, TRP), may be an evolved NodeB (evolved NodeB, eNB or eNodeB) in an LTE system, may be a home NodeB (for example, a home evolved NodeB, or a home NodeB, HNB) or a baseband unit (baseband unit, BBU), or may be a radio controller in a cloud radio access network (cloud radio access network, CRAN) scenario. Alternatively, the network device may be a relay station, an access point, a vehicle-mounted device, a wearable device, a network device in a 5G network, a network device in a future evolved PLMN network, or the like, may be an access point (access point, AP) in a WLAN, may be a gNB in a new radio (new radio, NR) system, may be a satellite base station in a satellite communication system, or may be a device that bears a base station function and that has various forms, or the like. This is not limited in embodiments of this application.

In a network structure, a network device may include a central unit (centralized unit, CU) node, a distributed unit (distributed unit, DU) node, a RAN device including a CU node and a DU node, or a RAN device including a CU control plane node (CU-CP node), a CU user plane node (CU-UP node), and a DU node.

The network device serves a cell, and the terminal device communicates with the cell by using a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), or the like. These small cells have characteristics of small coverage and low transmit power, and are applicable to providing a high-rate data transmission service.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of methods provided in embodiments of this application is not particularly limited in embodiments of this application, provided that a program that records code of the methods provided in embodiments of this application can be run to perform communication according to the methods provided in embodiments of this application. For example, the execution body of the methods provided in embodiments of this application may be a terminal device or a network device, or a functional module that can invoke and execute the program and that is in a terminal device or a network device.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk, or a magnetic tape), an optical disc (for example, a compact disc (compact disc, CD), a digital versatile disc (digital versatile disc, DVD), a smart card, and a flash memory component (for example, an erasable programmable read-only memory (erasable programmable read-only memory, EPROM), a card, a stick, or a key drive)). In addition, various storage media described in this specification may represent one or more devices and/or other machine-readable media that are configured to store information. The term "machine-readable media" may include but is not limited to a radio channel, and various other media that can store, include, and/or carry instructions and/or data.

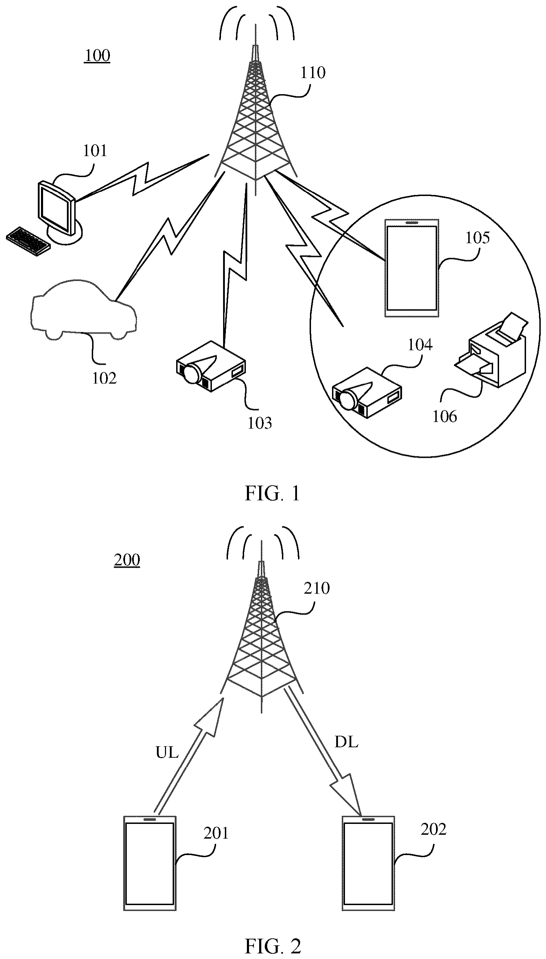

For ease of understanding embodiments of this application, a communication system 100 applicable to embodiments of this application is described in detail with reference to FIG. 1.

The communication system 100 may include a network device 110 and terminal devices 101 to 106. The terminal devices 101 to 106 may be communicatively connected to the network device 110. The terminal device 105 may be communicatively connected to the terminal devices 104 and 106. For example, the terminal devices 104 to 106 may belong to a same local area network, to perform an information transmission in the local area network.

A plurality of transmissions may be performed between the network device 110 and the terminal devices 101 to 106 in the communication system 100. A plurality of transmissions may be performed between the terminal devices 104 to 106.

Specifically, a transmission between any terminal device and the network device may include: The terminal device serves as a first communication device to send information to the network device, or the network device serves as a first communication device to send information to the terminal device. For example, two information transmissions are performed between the network device 110 and the terminal device 103. The first communication device may be a sending apparatus, and a second communication device may be a receiving apparatus.

A transmission between any terminal device and another terminal device may include: One terminal device may serve as the first communication device to perform a transmission, and the another terminal device may serve as the second communication device to perform a transmission. Certainly, the terminal devices serving as the first communication device and the second communication device may be switched. For example, the terminal device 105 may serve as the first communication device to send a control signal to the terminal device 104, and then the terminal device 104 may serve as the first communication device to send a feedback signal to the terminal device 105. This implements two transmissions between the terminal device 104 and the terminal device 105.

In addition, the network device 110 may further have a communication connection (not shown in the figure) to another network device, and a transmission may also be performed between network devices. Specifically, one network device may serve as the first communication device to perform a transmission, and the other network device may serve as the second communication device to perform a transmission.

The network device 110 in the communication system 100 shown in FIG. 1 may be configured in a sub-band full-duplex (sub-band full-duplex, SBFD) mode. The terminal device may be configured in the sub-band full-duplex mode or a sub-band half-duplex mode. Sub-band full-duplex means that both sending and receiving are performed on one symbol. Half-duplex means that only receiving or sending can be performed on one symbol.

With reference to FIG. 2, a communication system 200 applicable to embodiments of this application is described in detail.

The communication system 200 may include a network device 210 configured in the sub-band full-duplex mode and terminal devices 201 and 202 configured in the sub-band half-duplex mode. It is assumed that the terminal device 201 is configured as an uplink (uplink, UL), and the terminal device 201 may send an uplink signal to the network device 210. The terminal device 202 is configured as a downlink (downlink, DL), and the terminal device 202 may receive a downlink signal sent by the terminal device 210.

In addition, the terminal device 201 and the terminal device 202 may further switch between an uplink and a downlink, to switch a transmission direction.

Certainly, the communication systems in embodiments of this application are merely examples, and should not constitute a limitation on a system architecture of a communication system to which embodiments are specifically applied. Embodiments of this application may be applied to a communication system having a structure and a function similar to those of the communication systems shown in FIG. 1 and FIG. 2. In addition, there may be one or more terminal devices in embodiments. A quantity of terminal devices is not limited in embodiments. Based on the foregoing scenarios, embodiments of this application are described in detail by using the first communication device and the second communication device.

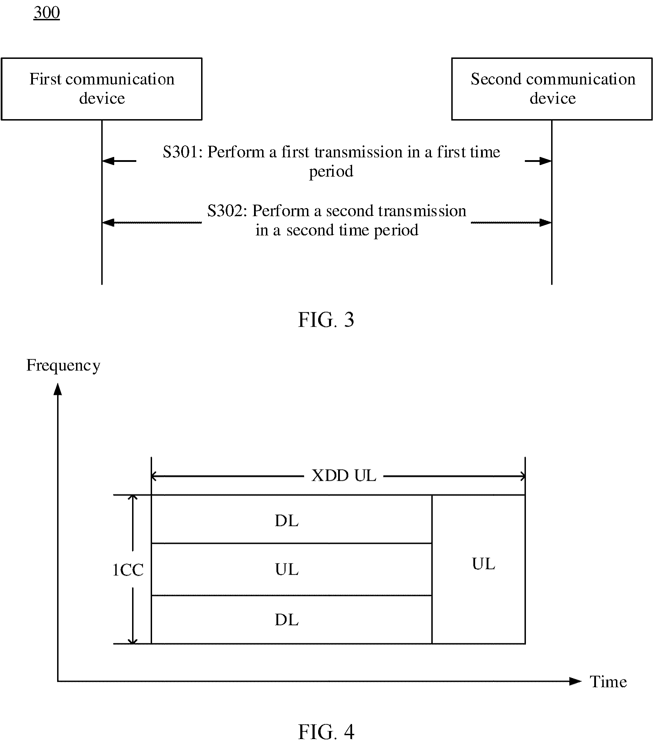

FIG. 3 shows a schematic flowchart of a communication method. The first communication device and the second communication device may perform a communication transmission according to the method shown in FIG. 3. As shown in FIG. 3, a method 300 may include the following steps:
S301: Perform a first transmission in a first time period.
S302: Perform a second transmission in a second time period, where the first transmission and the second transmission are performed on a same carrier of a same cell, a time interval between the first time period and the second time period is greater than or equal to a first duration threshold, and a configuration of a sub-band duplex mode in the first time period is different from a configuration of a sub-band duplex mode in the second time period.

In an optional implementation, if the configuration of the sub-band duplex mode in the first time period is different from the configuration of the sub-band duplex mode in the second time period, the time interval between the first time period and the second time period is greater than or equal to the first duration threshold. When the sub-band duplex mode in the first time period is different from the sub-band duplex mode in the second time period, the time interval between the first time period and the second time period is constrained to be or equal to the first duration threshold, so that the first transmission and the second transmission are not affected by different sub-band duplex modes corresponding to the two transmissions, that is, the first transmission and the second transmission can be normally performed.

In still another optional implementation, in the time interval between the first time period and the second time period, the first communication device and/or the second communication device do/does not perform a transmission.

Optionally, the first transmission and the second transmission may be two consecutive transmissions. The first transmission may be a transmission performed before the second transmission, the second transmission may be a transmission performed after the first transmission, and the time interval between the first time period and the second time period is a time interval between an end moment of the first time period and a start moment of the second time period. Certainly, the second transmission may be a transmission performed before the first transmission, the first transmission may be a transmission performed after the second transmission, and the time interval between the first time period and the second time period is a time interval between an end moment of the second time period and a start moment of the first time period.

Optionally, the first transmission and the second transmission may be two consecutive transmissions.

For example, the sub-band duplex mode may be an SBFD mode. In an SBFD solution, one carrier or one bandwidth part (bandwidth part, BWP) is divided into a plurality of nonoverlapping sub-bands, and transmission directions of different sub-bands may be different. To be specific, one carrier includes a first sub-band and a second sub-band that do not overlap, and transmission directions of the first sub-band and the second sub-band are different, for example, the first sub-band is used for a downlink transmission, and the second sub-band is used for an uplink transmission; or the first sub-band is used for an uplink transmission, and the second sub-band is used for a downlink transmission. It should be noted that the first sub-band and the second sub-band are two types of sub-bands with different transmission directions, and do not mean that one carrier includes only two sub-bands. For example, one carrier includes a sub-band #1 and a sub-band #2, and transmission directions of the sub-band #1 and the sub-band #2 are different. Alternatively, one carrier includes a sub-band #1, a sub-band #2, and a sub-band #3, transmission directions of the sub-band #1 and the sub-band #3 are the same, and transmission directions of the sub-band #1 and the sub-band #2 are different. In a typical SBFD solution shown in FIG. 4, 1CC may be divided into three sub-bands: a DL sub-band, a UL sub-band, and a DL sub-band. Certainly, division herein is merely an example, and does not constitute a limitation on specific division of the SBFD solution.

The first time period may include at least one time unit. The second time period may include at least one time unit, and the time unit includes an SBFD time unit or a non-SBFD time unit.

The following describes SBFD-related concepts.

An SBFD time unit is a time unit for which SBFD is configured. A frequency resource in the SBFD time unit includes an uplink frequency resource and a downlink frequency resource, the uplink frequency resource is used for an uplink transmission, and the downlink frequency resource is used for a downlink transmission.

A non-SBFD time unit is a time unit for which SBFD is not configured. A frequency resource corresponding to at least one of symbols included in the non-SBFD time unit is used only for a downlink transmission or an uplink transmission. For example, all the symbols in the non-SBFD time unit are downlink symbols; all the symbols in the non-full duplex time unit are uplink symbols; some symbols in the non-full duplex time unit are downlink symbols, and some symbols are uplink symbols; some symbols in the non-full duplex time unit are downlink symbols, some symbols are uplink symbols, and some symbols are flexible symbols; some symbols in the non-full duplex time unit are downlink symbols, and some symbols are flexible symbols; or some symbols in the non-full duplex time unit are uplink symbols, and some symbols are flexible symbols.

Time unit type: an SBFD time unit and a non-SBFD time unit. The non-SBFD time unit includes an uplink time unit, a downlink time unit, or a flexible time unit. A frequency resource corresponding to the uplink time unit is used only for an uplink transmission, a frequency resource corresponding to the downlink time unit is used only for a downlink transmission, and a frequency resource corresponding to the flexible time unit is used for an uplink transmission or an uplink transmission. The frequency resource corresponding to the downlink time unit is used only for a downlink transmission. A frequency resource corresponding to the SBFD time unit includes an uplink frequency resource and a downlink frequency resource. The uplink frequency resource is used for an uplink transmission, and the downlink frequency resource is used for a downlink transmission.

The time unit may be a symbol, a slot, a subframe, or the like.

According to the communication method provided in this embodiment, for the first transmission and the second transmission on the same carrier of the same cell, the configuration of the sub-band duplex mode in the first time period is different from the configuration of the sub-band duplex mode in the second time period, that is, a configuration is changed, and the time interval between the first time period and the second time period is set to be greater than or equal to the first duration threshold, that is, there is a specific time interval between the first transmission and the second transmission, so that the two transmissions can be normally performed when the configuration is changed. This can reduce data transmission interruption, implement a complete data transmission, and improve transmission efficiency.

Based on any one of the foregoing embodiments, that the configuration of the sub-band duplex mode in the first time period is different from the configuration of the sub-band duplex mode in the second time period may include two implementations.

In a first implementation, the sub-band duplex mode is configured for the first time period, and the sub-band duplex mode is not configured for the second time period.

Optionally, whether to configure the sub-band duplex mode may be determined by using an SBFD time unit and a non-SBFD time unit. The first transmission in the first time period is in the SBFD time unit, and the SBFD mode is configured for the first time period. The second transmission in the second time period is in the non-SBFD time unit, and the SBFD mode is not configured for the second time period.

In a possible design, the first time period may include at least one symbol or at least one slot, and the second time period may include at least one symbol or at least one slot.

In a possible design, if the sub-band duplex mode is configured for any symbol/slot or a plurality of symbols/slots in any time period, the sub-band duplex mode is configured for the time period.

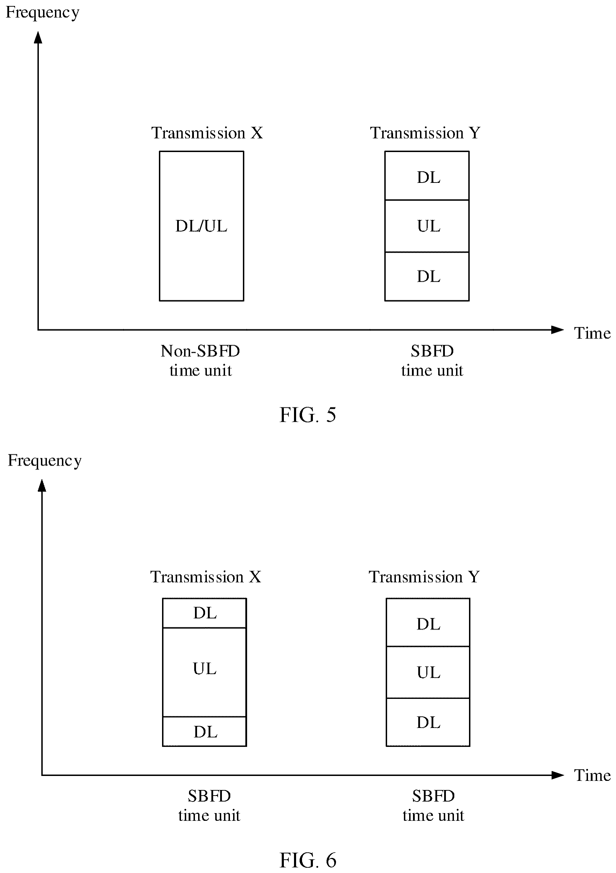

For ease of understanding this embodiment of this application, FIG. 5 shows an example diagram of a transmission in a time unit for which SBFD is configured and a transmission in a time unit for which SBFD is not configured.

Refer to FIG. 5. It can be learned that an uplink transmission or a downlink transmission may be performed in the time unit for which the sub-band duplex mode is not configured, and an uplink transmission and a downlink transmission may be simultaneously performed in the time unit for which the sub-band duplex mode is configured.

In this embodiment, two transmissions are respectively performed in the time unit for which the SBFD mode is configured and the time unit for which the SBFD mode is not configured, so that a transmission can be more flexibly scheduled. In addition, ensuring an interval between the two transmissions not less than the first duration threshold can ensure that a terminal device and/or a network device have/has sufficient time to switch between different duplex modes and adjust a working status of a related function module, to avoid a performance loss caused by transmission interruption in the two transmissions.

In a second implementation, the sub-band duplex mode is configured for the first time period, the sub-band duplex mode is configured for the second time period, and sub-band information in the sub-band duplex mode in the first time period is different from sub-band information in the sub-band duplex mode in the second time period.

Optionally, the sub-band duplex mode is configured for both the first time period and the second time period, that is, the first time period may include at least one SBFD symbol or at least one SBFD slot, and the second time period may include at least one SBFD symbol or at least one SBFD slot.

For ease of understanding this embodiment of this application, FIG. 6 shows an example diagram of SBFD configured with different sub-band information. Specifically, each of a transmission X and a transmission Y is a transmission in an SBFD time unit, and sub-band information of an uplink sub-band, a downlink sub-band, or the like in a time unit in which the transmission X is located is different from that in a time unit in which the transmission Y is located.

The sub-band information in the sub-band duplex mode of the first time period is different from the sub-band information in the sub-band duplex mode of the second time period. For example, both the first transmission and the second transmission are downlink transmissions, and a downlink sub-band configuration in the first time period is different from a downlink sub-band configuration in the second time period. For example, both the first transmission and the second transmission are uplink transmissions, and an uplink sub-band configuration in the first time period is different from an uplink sub-band configuration in the second time period.

In this embodiment, two transmissions are respectively performed in time units for which SBFD modes are configured and in which the sub-band information is different, so that a transmission can be more flexibly scheduled. In addition, ensuring an interval between the two transmissions not less than the first duration threshold can ensure that a terminal device and/or a network device have/has sufficient time to change an SBFD sub-band to adjust an operating parameter of a related function module, to avoid a performance loss caused by transmission interruption in the two transmissions.

Optionally, the sub-band information includes a start location of a sub-band and/or a bandwidth of the sub-band.

For example, that the sub-band information in the sub-band duplex mode in the first time period is different from the sub-band information in the sub-band duplex mode in the second time period includes: A start location corresponding to the sub-band information in the sub-band duplex mode in the first time period is different from a start location corresponding to the sub-band information in the sub-band duplex mode in the second time period; a bandwidth of a sub-band corresponding to the sub-band information in the sub-band duplex mode in the first time period is different from a bandwidth of a sub-band corresponding to the sub-band information in the sub-band duplex mode in the second time period; or a start location corresponding to the sub-band information in the sub-band duplex mode in the first time period is different from a start location corresponding to the sub-band information in the sub-band duplex mode in the second time period, and a bandwidth of a sub-band corresponding to the sub-band information in the sub-band duplex mode in the first time period is different from a bandwidth of a sub-band corresponding to the sub-band information in the sub-band duplex mode in the second time period.

In this embodiment, the sub-band information is configured based on the start location of the sub-band and/or the bandwidth of the sub-band, so that the sub-band duplex mode configured for the first time period can be different from the sub-band duplex mode configured for the second time period. The sub-band duplex mode can be quickly configured differently by using the start location of the sub-band and/or the bandwidth of the sub-band, thereby improving efficiency of configuring the sub-band duplex mode.

Optionally, when the time interval between the first time period and the second time period is greater than or equal to the first duration threshold, the first duration threshold may be determined based on a BWP switch delay.

In a possible implementation, an active bandwidth part BWP of the first transmission is the same as an active BWP of the second transmission, and the first duration threshold is less than the BWP switch delay.

In this embodiment, the active bandwidth part BWP of the first transmission is the same as the active bandwidth part BWP of the second transmission, and a BWP does not need to be switched for the first transmission and the second transmission. If a time interval required for normal execution of the first transmission and the second transmission is small, the first duration threshold may be less than the BWP switch delay. A small first duration threshold is set, so that the time interval between the first transmission and the second transmission can be constrained by the small first duration threshold. This can shorten the time interval between the first transmission and the second transmission, shorten transmission interruption time, increase a transmission rate of a terminal and/or a transmission rate of a network device, and improve transmission efficiency.

In still another possible implementation, an active bandwidth part BWP of the first transmission is different from an active BWP of the second transmission, and the first duration threshold is not less than the BWP switch delay.

Optionally, if the BWP of the first transmission is different from the BWP of the second transmission, an active BWP needs to be switched between the first transmission and the second transmission, and the first duration may be set to be not less than the BWP switch delay, so that a subsequent transmission is performed after the active BWP is successfully switched, and the transmission can be normally performed.

In a possible implementation, the first duration threshold may reuse an existing BWP switch delay in NR. Further, when both an active BWP and an SBFD configuration are changed, SBFD configuration switch and BWP switch are synchronized, and the existing BWP switch delay is reused during switching, to reduce overheads of an additional switch delay, shorten transmission interruption time, and improve a transmission rate of a terminal and/or a transmission rate of a network device, so that transmission efficiency is further improved.

The BWP switch delay may be change time required for a change of an active BWP of the terminal device. For the BWP switch delay, refer to the following Table 1.

**Table 1**

| *µ* | NR slot length (ms) | BWP switch delay T_{BWPswitchDelay} (slots) | |
|---|---|---|---|
| | | Type 1 | Type 2 |
| 0 | 1 | 1 | 3 |
| 1 | 0.5 | 2 | 5 |
| 2 | 0.25 | 3 | 9 |
| 3 | 0.125 | 6 | 18 |

The NR slot length may be slot duration of an NR system. A value of the BWP switch delay T_{BwPswitchDelay} (BWP switch delay) may be separately 1, 2, 3, and 6 pieces of slot duration of the NR system in a Type 1 mode, and may be separately 3, 5, 9, and 18 pieces of slot duration of the NR system in a Type 2 mode.

In this embodiment, if the active bandwidth part BWP of the first transmission is different from the active bandwidth part BWP of the second transmission, a BWP is switched between the first transmission and the second transmission. In addition, the first duration threshold is set to be not less than the BWP switch delay, and the time interval between the first transmission and the second transmission is set to be not less than the BWP switch delay, so that after the BWP is successfully switched, the first transmission and the second transmission are normally performed, thereby improving transmission stability and effectiveness.

Optionally, the first duration threshold may be determined in the following manner:

The first duration threshold is related to a capability of a terminal device, the first duration threshold is configured by a network device, the first duration threshold is predefined, the first duration threshold is one OFDM (Orthogonal Frequency Division Multiplexing, orthogonal frequency division multiplexing) symbol, the first duration threshold is two OFDM symbols, the first duration threshold is related to a subcarrier spacing, or the first duration threshold is equal to transition duration between an uplink and a downlink that are of a terminal device that does not support a full-duplex mode.

Optionally, the capability of the terminal device may be a transmission capability of the terminal device, and may specifically include a receiving capability, a sending capability, and/or the like.

Optionally, the network device may configure the first duration threshold, add the first duration threshold to indication information, and send the indication information to the terminal device. After receiving the indication information, the terminal device may parse the indication information to obtain the first duration threshold. Optionally, the first duration threshold may alternatively be predefined duration. For example, the first duration threshold may be set to a constant, and a value of the constant may be adaptively configured based on a use requirement.

Optionally, the first duration threshold may alternatively be one OFDM symbol, two OFDM symbols, or another quantity of OFDM symbols.

Optionally, the first duration threshold may be determined based on the subcarrier spacing (subcarrier space, SCS), and a specific value of the first duration threshold may be time domain duration corresponding to several subcarrier spacings. A subcarrier is a modulation technology used in an OFDM system. In the OFDM technology, a frequency range may be divided into a plurality of subcarriers, each subcarrier has a fixed frequency and a fixed phase, and each subcarrier may be used to independently transmit data. For example, in a 5G NR system, a bandwidth of 100 MHz is divided into more than 3000 subcarriers based on a subcarrier bandwidth of 15 kHz. The subcarrier spacing is an allocated spacing of each subcarrier in a bandwidth, that is, a bandwidth allocated to each subcarrier. 15 kHz is the subcarrier spacing.

Different subcarrier spacings correspond to different quantities of symbols. For example, Table 2 shows an example of a correspondence between a value of the subcarrier spacing and a value of the quantity of symbols.

**Table 2**

| *µ* | Δ*f* =2*^{µ}*·15 [kHz] | Quantity of symbols |
|---|---|---|
| 0 | 15 | 1 |
| 1 | 30 | 1 |
| 2 | 60 | 1 |
| 3 | 120 | 2 |
| 5 | 480 | 7 |
| 6 | 960 | 14 |

Optionally, the first duration threshold may reuse transition duration (transition time) of an uplink and a downlink that are of a terminal that does not need to support full-duplex communication and that is defined in the conventional technology of NR. Table 3 shows the transition duration between the uplink and the downlink. A unit of a value of the transition duration is *T_{c} =* 1/(Δ*fₘₐₓ · N_{f}*), where Δ*fₘₐₓ* =480·10³ Hz, and *N_{f}* =4096.

**Table 3**

| Transition time | FR1 | FR2 |
|---|---|---|
| *N*_{Tx-Rx} | 25600 | 13792 |
| *N*_{Rx-Tx} | 25600 | 13792 |

The first duration threshold reuses or is equal to switch duration between the uplink and the downlink, so that the time interval between the first transmission and the second transmission can be less than the BWP switch delay, thereby effectively shortening transmission interruption time, and improving a transmission rate.

In this embodiment, the first duration threshold may be specifically determined in any one of the following manners: the capability of the terminal device, a configuration of the network device, predefinition, the one or two OFDM symbols, the subcarrier spacing, the transition duration between the uplink and the downlink, and the like. In this way, the first duration threshold can be determined from various perspectives and directions such as a hardware configuration, a network configuration, or a preconfiguration of a device, so that the first duration threshold is set more accurately, thereby effectively shortening transmission interruption time, and improving a transmission rate.

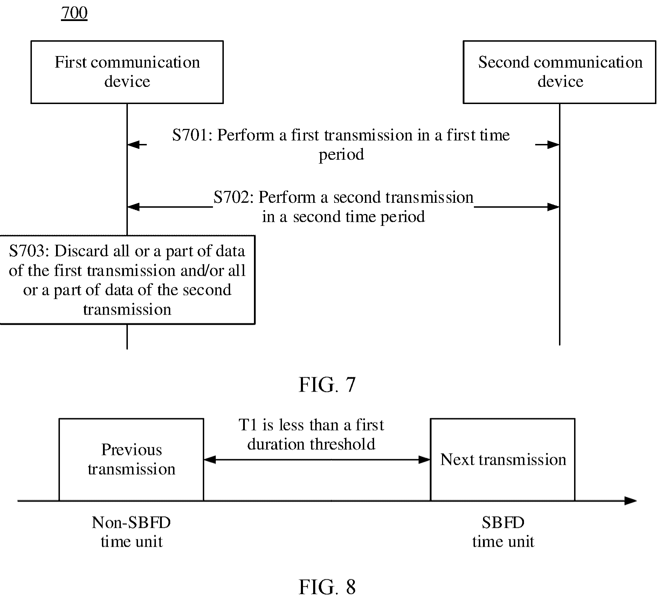

FIG. 7 shows a schematic flowchart of a communication method. A first communication device and a second communication device may perform a communication transmission according to the method shown in FIG. 6. As shown in FIG. 7, a method 700 may include the following steps:
S701: Perform a first transmission in a first time period.
S702: Perform a second transmission in a second time period, where the first transmission and the second transmission are performed on a same carrier of a same cell, a time interval between the first transmission and the second transmission is less than a first duration threshold, and a configuration of a sub-band duplex mode in the first time period is different from a configuration of a sub-band duplex mode in the second time period.
S703: Discard all or a part of data of the first transmission and/or all or a part of data of the second transmission.

Optionally, step 703 may include: discarding the all data of the first transmission; discarding the all data of the second transmission; discarding the part of data of the first transmission; discarding the part of data of the second transmission; discarding the part of data of the first transmission and the part of data of the second transmission; discarding the all data of the first transmission and the part of data of the second transmission; or discarding the part of data of the first transmission and the all data of the second transmission.

Optionally, the first duration threshold may be the same as the first duration threshold in the foregoing embodiment, or may be different from the first duration threshold in the foregoing embodiment. The first duration threshold in this embodiment may be determined based on the first duration threshold in the foregoing embodiment, and may be specifically duration less than the first duration threshold in the foregoing embodiment. A value of the first duration threshold is not excessively limited in this embodiment.

This embodiment may be used in combination with the foregoing communication method 300.

Discarding a part of data may mean discarding a part of data transmitted at a time, and continuing to transmit a remaining part of data. For example, the transmission is a transmission of an uplink signal or channel. A terminal device does not send a part of data of the uplink channel or signal. Correspondingly, a network device does not receive the part of data of the uplink channel or signal, and receives remaining transmitted data. For another example, the transmission is a transmission of a downlink signal or channel. A network device may not send a part of data of the downlink channel or signal. Correspondingly, a terminal device does not receive the part of data of the downlink channel or signal, but receives a part of transmitted data.

Discarding all data may mean discarding any one of the first transmission or the second transmission, or may mean that any one of the first transmission or the second transmission is invalid. An uplink transmission is used as an example. The terminal device may not send an uplink channel/signal. A downlink transmission is used as an example. The network device may not send a downlink channel/signal.

Optionally, the first transmission and/or the second transmission may be cross-slot transmissions or transmissions of channels or signals that are transmitted for a plurality of times in one slot, for example, may be a repeatedly transmitted PDSCH (Physical Downlink Shared Channel, physical downlink shared channel), a repeatedly transmitted PUSCH (Physical Uplink Shared Channel, physical uplink shared channel), a repeatedly transmitted PUCCH (Physical Uplink Control Channel, physical uplink control channel), an SPS (Semi-Persistent Scheduling, semi-persistent scheduling) PDSCH, a CG (configured grant, configured grant) PUSCH, a PUSCH on which a TB (Transport Block, transport block) is mapped across a plurality of slots, and a plurality of PUSCHs and PDSCHs scheduled through one piece of DCI (Downlink Control Information, downlink control information). For the foregoing types of channel or signal transmissions, if all data of a transmission is discarded, it may be considered that the transmission is invalid, and the transmission is not counted in a quantity of transmissions.

Optionally, if the discarded transmission is a PDCCH (Physical Downlink Control Channel, physical downlink control channel), it may be considered that one or more search spaces corresponding to the discarded transmission at corresponding moments are invalid for the terminal device, and the terminal device skips monitoring or does not monitor the one or more search spaces corresponding to the moments.

In this embodiment, the first transmission is performed in the first time period, and the second transmission is performed in the second time period. The time interval between the first transmission and the second transmission is less than the first duration threshold, that is, the time interval between the first transmission and the second transmission is small. In this case, to ensure integrity of received data, the all or the part of data of the first transmission and/or the all or the part of data of the second transmission may be discarded, and remaining data after discarding may not be affected by different sub-band duplex modes of the first transmission and the second transmission. In this way, flexibility and a possibility of a channel or signal transmission can be ensured. In addition, due to the existence of the discarded data, a sufficient time interval may be reserved, so that the network device and/or the terminal device have/has sufficient time to perform configuration or function switching, thereby implementing an effective data transmission and improving data transmission efficiency.

Optionally, step 703 may be performed by the second communication device or the first communication device.

Optionally, there may be two possible scenarios in which the time interval between the first transmission and the second transmission is less than the first duration threshold.

Scenario 1: A transmission of a last symbol in a previous transmission ends before a first symbol in a next transmission starts.

Specifically, in an example diagram of a time interval setting shown in FIG. 8, a time interval T1 between a previous transmission corresponding to a non-SBFD symbol and a next transmission corresponding to an SBFD symbol is less than the first duration threshold. The previous transmission may be the first transmission, and the next transmission may be the second transmission. Alternatively, the previous transmission may be the second transmission, and the next transmission may be the first transmission.

Scenario 2: A transmission of a last symbol in a previous transmission ends before a first symbol in a next transmission starts.

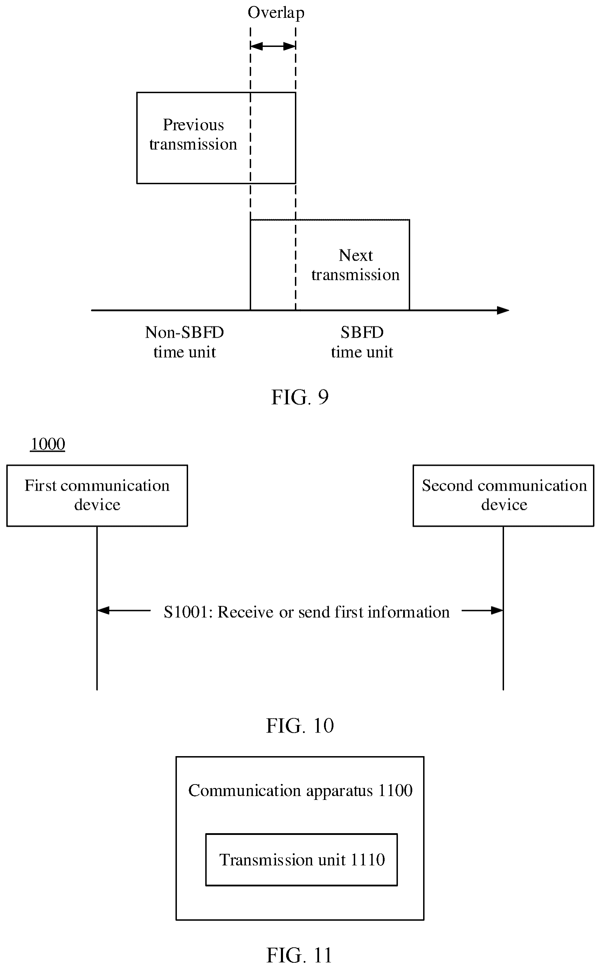

Specifically, in an example diagram of a time interval setting shown in FIG. 9, a previous transmission corresponding to a non-SBFD symbol and a next transmission corresponding to an SBFD symbol overlap. The previous transmission may be the first transmission, and the next transmission may be the second transmission. Alternatively, the previous transmission may be the second transmission, and the next transmission may be the first transmission.

Optionally, data may be discarded according to the following rules:
Total duration of the all or the part of the data of the first transmission that is discarded and/or the all or the part of the data of the second transmission that is discarded does not exceed the first duration threshold.

The duration of the discarded data may be specifically less than or equal to the first duration threshold. The all or the part of the data of the first transmission that is discarded corresponds to first duration, that is, the first duration may be duration corresponding to the discarded data of the first transmission. The all or the part of the data of the second transmission that is discarded corresponds to second duration, that is, the second duration may be duration corresponding to the discarded data of the second transmission. Total discarding duration corresponding to the first duration and/or the second duration does not exceed the first duration threshold. Specifically, the first duration may not exceed the first duration threshold, the second duration may not exceed the first duration threshold, or a sum of duration derived by adding the first duration and the second duration does not exceed the first duration threshold.

In this embodiment, the total duration of the discarded data is constrained not to exceed the first duration threshold, so that the discarded data can be reduced under a limitation of the first duration threshold, and transmitted data can be maximized while a normal transmission is maintained, thereby increasing a data transmission amount corresponding to two transmissions, and improving data transmission efficiency.

In a possible implementation, the network device may indicate to specifically discard a target transmission in the first transmission and/or the second transmission, and indicate a specific location that corresponds to the target transmission and that is in the discarded data. For example, the target transmission may be the first transmission, the target transmission may be the second transmission, or the target transmission may include both the first transmission and the second transmission.

For example, both the first transmission and the second transmission are transmissions of downlink channels/signals. In this case, the network device may determine, from the first transmission and the second transmission according to the discarding rule, the target transmission to be discarded and the specific location that corresponds to the target transmission and that is in the discarded data. In this case, the terminal device may monitor/detect/receive, at a location of transmitted data, data transmitted by the network device. Both the first transmission and the second transmission are transmissions of uplink channels/signals. In this case, the terminal device may determine, from the first transmission and the second transmission according to the discarding rule, the target transmission to be discarded and the specific location that corresponds to the target transmission and that is in the discarded data. In this case, the network device may monitor/detect/receive, at a location of transmitted data, data transmitted by the terminal device.

Optionally, data may be further discarded according to the following rule:
determining, based on a transmission priority, to discard the all or the part of data of the first transmission and/or the all or the part of data of the second transmission.

In this embodiment, it may be determined, based on the transmission priority, to discard the all or the part of data of the first transmission and/or the all or the part of data of the second transmission. A transmission to be discarded is determined based on the transmission priority. This can ensure that a transmission with higher importance is preferentially performed, to avoid being discarded, and ensure transmission reliability of a system. In addition, signaling indication overheads can be reduced, and transmission efficiency of the system can be improved.

Optionally, a transmission with a higher transmission priority is more preferentially performed, and a transmission with a lower transmission priority is more preferentially discarded.

In this embodiment, a transmission with a high transmission priority may be preferentially performed, and a transmission with a lower transmission priority is preferentially discarded, so that a specific transmission and specific discarding can be implemented based on the transmission priority, thereby implementing a normal transmission.

In a possible implementation, a criterion for the transmission priority includes:
A transmission priority of a control channel is higher than a transmission priority of a data channel, where the control channel includes at least one of a PDCCH and a PUCCH, and the data channel includes at least one of a PDSCH and a PUSCH.

Optionally, in a same transmission link direction, the transmission priority of the control channel is higher than the transmission priority of the data channel. For example, a transmission priority of the PDCCH is higher than a transmission priority of the PDSCH; a transmission priority of the PUCCH is higher than a transmission priority of the PUSCH; or a priority of a PRACH is higher than a priority of the PUSCH or the PUCCH.

Optionally, in a same transmission link direction or different transmission link directions, the transmission priority of the control channel is higher than the transmission priority of the data channel. For example, a transmission priority of the PDCCH is higher than a transmission priority of the PDSCH or the PUSCH; a transmission priority of the PUCCH is higher than a transmission priority of the PDSCH or the PUSCH; or a transmission priority of a PRACH is higher than a transmission priority of the PDSCH, the PUSCH, or the PUCCH.

In this embodiment, the priority of the control channel is set to be higher than the priority of the data channel, so that a transmission of a control channel/signal can take precedence over a transmission of a data channel/signal, and control information is transmitted more preferentially, thereby ensuring reliability of a system.

Alternatively, a transmission priority of a dynamically scheduled channel or signal is higher than a transmission priority of a semi-statically configured channel or signal.

In an optional implementation, the dynamically scheduled channel or signal may be a channel or signal scheduled through an L1/L2 (for example, DCI or MCE (Master Communication Equipment, master communication equipment)) instruction, for example, may be a PDSCH/PUSCH scheduled through the DCI, an aperiodic CSI-RS (Channel State Information-Reference Signal, channel state information reference signal) or a semi-persistent CSI-RS, an aperiodic SRS (Sounding Reference Signal, sounding reference signal) or a semi-persistent SRS, or an aperiodic PUCCH or a semi-persistent PUCCH. The semi-statically configured channel or signal may be a channel or signal scheduled through higher layer signaling (for example, a SIB) or RRC (Radio Resource Control, radio resource control protocol) signaling, for example, may be an SPS PDSCH, a CG PUSCH, a periodic PUCCH, a periodic CSI-RS, a periodic SRS, and an SSB (Synchronization Signal/PBCH Block, synchronization signal block).

In this embodiment, the transmission priority of the dynamically scheduled channel or signal is higher than the transmission priority of the semi-statically configured channel or signal, so that flexible scheduling of a base station can be implemented. For example, a transmission of urgent, burst, or high-priority service data may be preferentially performed in a dynamic scheduling manner, thereby improving data transmission scheduling efficiency.

Alternatively, a transmission priority of an uplink channel or signal is higher than a transmission priority of a downlink channel or signal.

For example, a transmission priority of a PUSCH or a PUCCH may be higher than a transmission priority of a PDSCH or a PDCCH. Generally, a quantity of time domain resources for an uplink transmission is greater than a quantity of time domain resources for a downlink transmission. An UL (UpLink, uplink) sub-band (sub-band) may be configured on a downlink symbol or a flexible symbol for an uplink transmission. Therefore, the priority of the uplink channel or signal is higher than the priority of the downlink channel or signal. This helps improve transmission performance of the uplink channel, reduce an uplink transmission delay, and improve coverage and a rate of an uplink transmission.

Alternatively, a transmission priority of a DMRS (Demodulation Reference Signal, demodulation reference signal) is higher than a transmission priority of a data part.

In an optional implementation, the transmission priority of the DMRS may be higher than a transmission priority of channel data corresponding to the DMRS. For example, a transmission priority of a DMRS of a PDSCH is higher than a transmission priority of a data part of the PDSCH. A transmission priority of a DMRS of a PUSCH is higher than a transmission priority of a data part of the PUSCH. A transmission priority of a DMRS of a PUCCH is higher than a transmission priority of a data part of the PUCCH.

In still another optional implementation, a transmission priority of a DMRS of one channel is higher than a transmission priority of a data part of the same channel and transmission priorities of data parts of different channels. For example, a transmission priority of a DMRS of a PDSCH is higher than a transmission priority of a data part of the PDSCH, a PUSCH, or a PUCCH, or a transmission priority of a DMRS of a PUSCH is higher than a transmission priority of a data part of a PDSCH, the PUSCH, or a PUCCH.

In this embodiment, a DMRS is usually used for channel estimation. If the DMRS is discarded, channel estimation of an entire transmission may be affected, and further, demodulation of the entire transmission is affected. Therefore, the DMRS is more important than a data part. If the DMRS conflicts with the data, the DMRS is preferentially transmitted, and the data part is preferentially discarded, so that channel estimation can be implemented.

Optionally, the method further includes:
if the discarded data of the first transmission or the second transmission includes the DMRS, discarding the all data of the first transmission or the all data of the second transmission. In other words, when the discarded data includes the DMRS, an entire transmission in which the discarded data is located may be directly discarded.

In this embodiment, if the discarded data includes the DMRS, the all data of the first transmission or the all data of the second transmission may be directly discarded, and a transmission is invalid, so that the invalid transmission can be reduced, and transmission efficiency can be improved.

In a possible design, if a transmission priority of the first transmission is the same as a transmission priority of the second transmission, a to-be-discarded target transmission and a discarding location corresponding to the target transmission may be determined according to a predefined discarding policy or a discarding policy indicated by the network device. For example, if the first transmission is configured with SBFD, and the second transmission is not configured with SBFD, a transmission configured with SBFD may be preferentially discarded.

Optionally, the sub-band duplex mode is configured for the first time period, the sub-band duplex mode is not configured for the second time period, and the transmission priority of the first transmission is lower than the transmission priority of the second transmission. That is, a transmission priority of a channel/signal on an SBFD symbol (slot) is lower than a transmission priority of a transmission on a non-SBFD symbol (slot).

In this embodiment, the transmission priority of the second transmission in a time unit for which the SBFD mode is not configured is set to be higher than the transmission priority of the first transmission in a time unit for which the SBFD mode is configured, so that a channel or signal for which the sub-band duplex mode is not configured is preferentially transmitted. Therefore, it is ensured that a channel or signal with better link quality is preferentially transmitted, and system transmission efficiency is improved.

Based on any one of the foregoing embodiments, both the first transmission and the second transmission are uplink transmissions, both the first transmission and the second transmission are downlink transmissions, or the first transmission is an uplink transmission and the second transmission is a downlink transmission.

The first transmission and the second transmission may be two independent channels or signals.

Optionally, the uplink transmission includes a transmission of any one of the following: a PDCCH, a PDSCH, a CSI-RS, an SSB, and a DMRS, and/or the downlink transmission includes a transmission of any one of the following: a PUCCH, a PUSCH, a PRACH, an SRS, a PTRS, and a DMRS.

The first transmission and the second transmission may be channels or signals transmitted in one slot or across a plurality of slots.

Optionally, the first transmission and the second transmission may include: a repeatedly transmitted PDSCH, a repeatedly transmitted PUSCH, a repeatedly transmitted PUCCH, an SPS PDSCH, a CG PUSCH, a PUSCH on which a TB is mapped across a plurality of slots, a periodic or semi-persistent SRS, a CSI-RS, a PUCCH, a plurality of PUSCHs/PDSCHs scheduled through one piece of DCI, and the like.

Optionally, in a scenario in which a channel such as a PDSCH, a PUSCH, a PDCCH, a PUCCH, or a PBCH is transmitted, when a part of data transmitted at any time is discarded, there may be the following two implementations:

Implementation 1: A puncturing scheme is used. To be specific, in a process in which a rate matching process and a resource mapping process that are of a transmission channel remain unchanged, a location of an RE that cannot be used for a channel transmission is determined, and data carried on the RE that cannot be used for a channel transmission is not sent.

For example, it is assumed that the transmission channel includes 1000 REs (Resource Element, resource element), and each RE is used to carry 2 bits when QPSK modulation is used. If there are 100 to-be-discarded REs, 2000 pieces of bit data are output in the rate matching process. However, data corresponding to the 100 to-be-discarded REs cannot be sent, and remaining 900 REs are actually used to transmit 1800 pieces of bit data in the corresponding 2000 pieces of bit data.

Implementation 2: A rate matching scheme is used. In the rate matching scheme, a rate matching process of a transmission channel changes with a discarded part. That is, in the rate matching process, when an output coded bit is determined, a length of the coded bit may be determined based on a remaining RE other than a to-be-discarded RE.

For example, it is assumed that the transmission channel includes 1000 REs, and each RE is used to carry 2 bits when QPSK modulation is used. If there are 100 to-be-discarded REs, remaining 1000-100=900 REs are used for a transmission. Therefore, 1800 coded bits are output through rate matching, and the remaining 900 REs are used to transmit the 1800 pieces of bit data.

Generally, the rate matching scheme has higher performance than the puncturing scheme. In addition, a larger amount of discarded data indicates a more obvious performance advantage of the rate matching scheme. However, complexity of the puncturing scheme is low. Therefore, the puncturing scheme or the rate matching scheme may be adaptively selected based on a size of discarded data, to discard all or a part of data transmitted at a time.

Optionally, whether to use the puncturing scheme or the rate matching scheme to specifically transmit data may be determined based on a proportion of a resource corresponding to discarded data to a total data resource of a channel. For example, if the proportion is less than a first threshold, the puncturing scheme may be used; or if the proportion is greater than the proportion threshold, the rate matching scheme may be used. Extendedly, discarded resource or a total transmission resource includes only a resource carrying data, and does not include a resource carrying a DMRS.

For another example, an equivalent bit rate increase/rise amount of the discarded data on the channel may be determined. If the equivalent bit rate increase/rise amount is less than or equal to a second threshold, the puncturing scheme is used; or if the equivalent bit rate increase/rise amount is greater than the second threshold, the rate matching scheme is used. The equivalent bit rate increase/rise amount may include an absolute value of an increase or a rise, or a relative value of an increase or a rise relative to an original bit rate.

For another example, an equivalent bit rate decrease/loss amount of the discarded data on the channel may be determined. If the equivalent bit rate decrease/loss amount is less than or equal to a third threshold, the puncturing scheme may be used; or if the equivalent bit rate decrease/loss amount is greater than the third threshold, the rate matching scheme is used.

Optionally, whether to use the puncturing scheme or the rate matching scheme may be determined based on a predefined protocol or an indication of the network device.

FIG. 10 shows a schematic flowchart of a communication method. A first communication device and a second communication device may perform a communication transmission according to the method shown in FIG. 11. As shown in FIG. 10, a communication method 1000 may include the following steps:

S1001: Receive or send first information, where the first information indicates whether different transmissions of a first channel or signal can be separately performed in a first-type time unit and a second-type time unit, a sub-band duplex mode is configured for the first-type time unit, and the sub-band duplex mode is not configured for the second-type time unit.

Optionally, different transmissions may be two transmissions in a same slot or two transmissions performed across different slots, for example, may include a repeatedly transmitted PDSCH/PUSCH/PUCCH, an SPS PDSCH, a CG PUSCH, a PUSCH on which a TB is mapped across a plurality of slots, a periodic or semi-persistent SRS/CSI-RS/PUCCH, a plurality of PUSCHs/PDSCHs scheduled through one piece of DCI, an SSB, and the like. Crossing different slots means that two transmissions are performed in different slots. A same slot means that two transmissions are performed in the same slot. The two transmissions may be a first transmission and a second transmission.

Optionally, the first-type time unit may include at least one symbol/slot, and the second-type time unit may include at least one symbol/slot.

Optionally, if the sub-band duplex mode is configured for one or more symbols in a time unit, it is considered that the sub-band duplex mode is configured for the time unit.

The first information may indicate that different transmissions of the first channel or signal can be separately performed in the first-type time unit and the second-type time unit, indicate that different transmissions of the first channel or signal cannot be performed in the first-type time unit and the second-type time unit, or indicate that different transmissions of one of the first channel or signal can be performed in the first-type time unit, and different transmissions of the other of the first channel or signal cannot be performed in the second-type time unit.

Optionally, the first information indicates yes, and indicates that a channel or signal supports a transmission across an SBFD time unit and a non-SBFD time unit. A channel or signal can be transmitted in the first-type time unit for which the sub-band duplex mode is configured and the second-type time unit for which the sub-band duplex mode is not configured.

Optionally, the first information may separately indicate configurations of two transmissions. Specifically, the first information may include two pieces of sub-information. For example, a first piece of sub-information may indicate that the first transmission is "yes", and a second piece of sub-information may indicate that the second transmission is "no". "Yes" indicates that different transmissions of a signal/channel can be performed in the first-type time unit, and "no" indicates that different transmissions of another signal/channel cannot be performed in the second-type time unit.

For example, the first information indicates no, and indicates that the channel or signal does not support a transmission across the SBFD time unit and the non-SBFD time unit. Whether to use a transmission corresponding to the SBFD time unit or a transmission corresponding to the non-SBFD time unit is determined based on a time domain location of the first transmission. Specifically, if the first transmission is performed in the SBFD time unit, all transmissions of the channel or signal are performed in the SBFD time unit. If the first transmission is performed in the non-SBFD time unit, all transmissions of the channel or signal are performed in the non-SBFD time unit.

For example, the first information may include two pieces of sub-information, and DCI indicates the first information corresponding to 2 bits. One indication field may include 2 bits, and a first bit indicates whether a transmission can be performed across the SBFD time unit and the non-SBFD time unit. For example, a value "0" of the bit indicates that a transmission cannot be performed across the SBFD time unit and the non-SBFD time unit, and a value "1" of the bit indicates that a transmission can be performed across the SBFD time unit and the non-SBFD time unit. A second bit may indicate whether a transmission is performed in the SBFD time unit or the non-SBFD time unit. For example, a value "0" of the bit indicates that a transmission is performed in the SBFD time unit, and a value "1" of the bit indicates that a transmission is performed in the non-SBFD time unit. For another example, 2 bits are combined to indicate whether a transmission can be performed across the SBFD time unit and the non-SBFD time unit, and whether the SBFD time unit or the non-SBFD time unit is specifically used for a channel or signal. For example, "00" may indicate that a transmission can be performed across the SBFD time unit and the non-SBFD time unit. "01" and "10" may indicate that a transmission cannot be performed across the SBFD time unit and the non-SBFD time unit, "01" indicates that a transmission can be performed only in the SBFD time unit, and "10" indicates that a transmission can be performed only in the non-SBFD time unit.

For ease of understanding, 2 bits shown in the following Table 4 indicate examples of different transmissions.

**Table 4**

| Indication state | Indicated meaning |
|---|---|
| 00 | A transmission may be performed across an SBFD time unit and a non-SBFD time unit |
| 01 | A transmission cannot be performed across the SBFD time unit and the non-SBFD time unit, and can be performed only in the SBFD time unit |
| 10 | A transmission cannot be performed across the SBFD time unit and the non-SBFD time unit, and can be performed only in the non-SBFD time unit |
| 11 | Reserved |

In this embodiment, the first information is introduced to indicate whether different transmissions of a channel or signal can be separately performed in the first-type time unit and the second-type time unit. In addition, the sub-band duplex mode is configured for the first-type time unit, and the sub-band duplex mode is not configured for the second-type time unit. Therefore, when different duplex modes are configured for the first-type time unit and the second-type time unit, the first information may indicate whether different transmissions can be separately performed in the first-type time unit and the second-type time unit. This flexibly configures the channel or signal, so that the two transmissions are normally performed under an indication of the first information, thereby improving stability and reliability of an information transmission.

Optionally, the first information is carried in DCI, a SIB, RRC signaling, or a MAC CE.

In this embodiment, the first information is transmitted through the DCI, the SIB, the RRC signaling, the MAC CE, or the like, so that the network device can flexibly configure a transmission mode or type through a signal/channel of the DCI, the SIB, the RRC signaling, or the MAC CE, thereby improving flexibility and effectiveness of a transmission between the terminal device and the network device.

When the first information is carried in the DCI, the first information may be indicated in a new indication field of the DCI. Alternatively, the first information may be further indicated in a TDRA indication field of the DCI. For example, if the indication field is "1", it indicates yes, or if the indication field is "0", it indicates no.

Specifically, for a PDSCH or a PUSCH, one piece of indication information, for example, EnabledacrossSBFDAndnon-SBFD, may be added to a time domain resource allocation table of the PDSCH or the PUSCH, and then EnabledacrossSBFDAndnon-SBFD is indicated by using a column indicated by using the TDRA indication field in the DCI. For example, the PUSCH is used as an example, and time domain resource allocation may be shown in Table 5.

**Table 5**

| k2 | Mapping type | Startsymbol Andlength | ... | numberOfRe petitions | numberOfSlots TBoMS | EnabledacrossSBFDAndno n-SBFD |
|---|---|---|---|---|---|---|
| 2 | type A | 8 | | 2 | 2 | 1 |
| ... | ... | ... | ... | ... | ... | ... |
| 2 | type A | 8 | | 2 | 2 | 0 |

Columns of Mapping type, StartsymbolAndlength, ..., numberOfRepetitions, numberOfSlotsTBoMS, and the like are about the conventional technology. The last column EnabledacrossSBFDAndnon-SBFD is newly added indication information, a value "0" of the indication information indicates no, and a value "1" of the indication information indicates yes.

Optionally, the communication method 1000 shown in FIG. 10 may be used in combination with the embodiment 300 shown in FIG. 3 and the embodiment shown in FIG. 7.

For example, for any channel or signal, when the first information indicates that a transmission of a channel or signal may cross the SBFD time unit and the non-SBFD time unit, some transmissions of the channel or signal are performed in the SBFD time unit, and other transmissions are performed in the non-SBFD unit. For any two transmissions in the transmissions, if the two transmissions respectively occur in the non-SBFD time unit and the SBFD time unit, content in Embodiment 1 and Embodiment 2 may be associated for implementation.

Optionally, parameters used for the two transmissions performed in the non-SBFD time unit and the SBFD time unit are different, and the used parameters include but are not limited to a modulation scheme, a channel coding bit rate, a time frequency resource, transmit power, a beam, a DMRS configuration, and the like.

Optionally, for any channel or signal, when the first information indicates that a transmission of a channel or signal cannot cross the SBFD time unit and the non-SBFD time unit, all transmissions of the channel or signal are performed in the SBFD time unit or the non-SBFD time unit. With reference to the foregoing embodiment, different bandwidths may be configured for transmissions in the SBFD time unit, so that sub-band duplex modes of two transmissions are different.

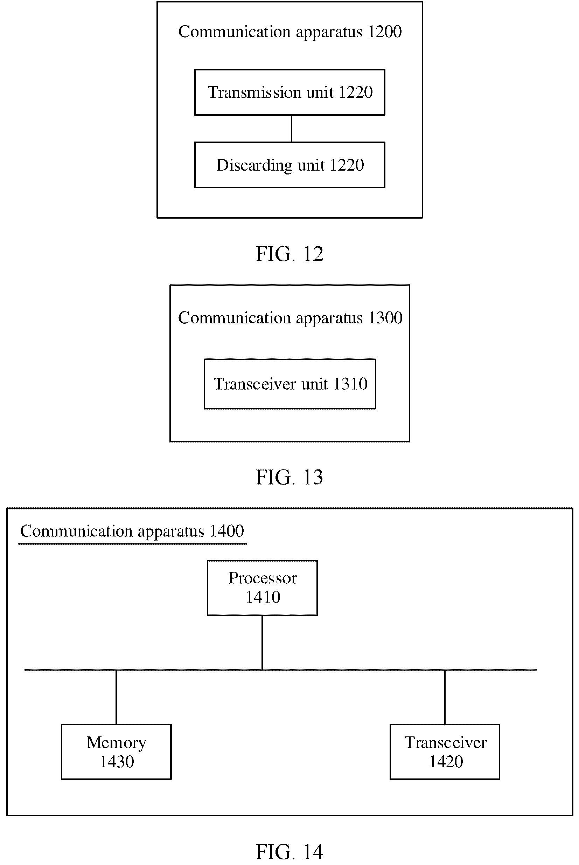

The foregoing describes in detail the communication methods in embodiments of this application with reference to FIG. 1 to FIG. 10. The following describes in detail communication apparatuses in embodiments of this application with reference to FIG. 11 and FIG. 14.

FIG. 11 shows a block diagram of a communication apparatus 1100 according to an embodiment of this application. The apparatus 1100 may include a transmission unit 1110.

In a possible implementation, the communication apparatus 1100 may perform steps performed in the method 1100.

The transmission unit 1110 may be configured to: perform a first transmission in a first time period; and perform a second transmission in a second time period, where the first transmission and the second transmission are performed on a same carrier of a same cell, a time interval between the first time period and the second time period is greater than or equal to a first duration threshold, and a configuration of a sub-band duplex mode in the first time period is different from a configuration of a sub-band duplex mode in the second time period.

Optionally, the sub-band duplex mode is configured for the first time period, and the sub-band duplex mode is not configured for the second time period.

Optionally, the sub-band duplex mode is configured for the first time period, the sub-band duplex mode is configured for the second time period, and sub-band information in the sub-band duplex mode in the first time period is different from sub-band information in the sub-band duplex mode in the second time period.

Optionally, the sub-band information includes a start location of a sub-band and/or a bandwidth of the sub-band.

Optionally, an active bandwidth part BWP of the first transmission is the same as an active BWP of the second transmission, and the first duration threshold is less than a BWP switch delay.

Optionally, an active bandwidth part BWP of the first transmission is different from an active BWP of the second transmission, and the first duration threshold is not less than a BWP switch delay.

Optionally, the first duration threshold is related to a capability of a terminal device, the first duration threshold is configured by a network side device, the first duration threshold is predefined, the first duration threshold is one OFDM symbol, the first duration threshold is two OFDM symbols, the first duration threshold is related to a subcarrier spacing, or the first duration threshold is equal to transition duration between an uplink and a downlink that are of a terminal device that does not support a full-duplex mode.

FIG. 12 shows a block diagram of a communication apparatus 1200 according to an embodiment of this application. The apparatus 1200 may include a transmission unit 1210 and a discarding unit 1220.

In a possible implementation, the communication apparatus 1200 may perform steps performed in the method 700.

The transmission unit 1210 may be configured to: perform a first transmission in a first time period; and perform a second transmission in a second time period, where the first transmission and the second transmission are performed on a same carrier of a same cell, a time interval between the first time period and the second time period is less than a first duration threshold, and a configuration of a sub-band duplex mode in the first time period is different from a configuration of a sub-band duplex mode in the second time period.

The discarding unit 1220 may be configured to discard all or a part of data of the first transmission and/or all or a part of data of the second transmission.

Optionally, total duration of the all or the part of data of the first transmission that is discarded and/or the all or the part of data of the second transmission that is discarded does not exceed the first duration threshold.

Optionally, the discarding unit 1220 is further configured to:
determine, based on a transmission priority, to discard the all or the part of data of the first transmission and/or the all or the part of data of the second transmission.

Optionally, a transmission with a higher transmission priority is more preferentially performed, and a transmission with a lower transmission priority is more preferentially discarded.

Optionally, a step of determining the transmission priority includes:

A transmission priority of a control channel is higher than a transmission priority of a data channel, where the control channel includes at least one of a PDCCH and a PUCCH, and the data channel includes at least one of a PDSCH and a PUSCH;
a transmission priority of a dynamically scheduled channel or signal is higher than a transmission priority of a semi-statically configured channel or signal;
a transmission priority of an uplink channel or signal is higher than a transmission priority of a downlink channel or signal; or
a transmission priority of a DMRS is higher than a transmission priority of a data part.

Optionally, the method further includes:
if the discarded data of the first transmission or the second transmission includes the DMRS, discarding the all data of the first transmission or the all data of the second transmission.

Optionally, the sub-band duplex mode is configured for the first time period, the sub-band duplex mode is not configured for the second time period, and a transmission priority of the first transmission is lower than a transmission priority of the second transmission.

In an optional implementation, both the first transmission and the second transmission are uplink transmissions, both the first transmission and the second transmission are downlink transmissions, or the first transmission is an uplink/downlink transmission and the second transmission is a downlink transmission.

Optionally, the uplink transmission includes a transmission of any one of the following: a PDCCH, a PDSCH, a CSI-RS, an SSB, and a DMRS, and/or the downlink transmission includes a transmission of any one of the following: a PUCCH, a PUSCH, a PRACH, an SRS, a PTRS, and a DMRS.

FIG. 13 shows a block diagram of a communication apparatus 1300 according to an embodiment of this application. The apparatus 1300 may include a transceiver unit 1310.

In a possible implementation, the communication apparatus 1300 may perform steps performed in the method 1300.

The transceiver unit 1310 may be specifically configured to: receive or send first information, where the first information indicates whether different transmissions of a first channel or signal can be separately performed in a first-type time unit and a second-type time unit, a sub-band duplex mode is configured for the first-type time unit, and the sub-band duplex mode is not configured for the second-type time unit.

Optionally, the first information is carried in DCI, a SIB, RRC signaling, or a MAC CE.

It should be understood that the communication apparatus herein is embodied in a form of a functional unit. The term "unit" herein may be an application-specific integrated circuit (application-specific integrated circuit, ASIC), an electronic circuit, a processor (such as a shared processor, a dedicated processor, or a group processor) configured to execute one or more software or firmware programs, a memory, a merged logic circuit, and/or another appropriate component that supports the described function. In an optional example, a person skilled in the art may understand that the communication apparatus may be specifically the terminal device or the network device in the foregoing embodiments, and the apparatus may be configured to perform procedures and/or steps in the foregoing method embodiments. To avoid repetition, details are not described herein again.

The communication apparatus in the foregoing solutions has functions of implementing corresponding steps performed by the network device or the terminal device in the foregoing methods. The foregoing functions may be implemented by hardware, or may be implemented by hardware by executing corresponding software. The hardware or the software includes one or more modules corresponding to the foregoing functions.

In embodiments of this application, each of the apparatuses in FIG. 11 to FIG. 13 may alternatively be a chip or a chip system, for example, a system on chip (system on chip, SoC).

FIG. 14 shows a block diagram of another communication apparatus 1400 according to an embodiment of this application. The apparatus 1400 includes a processor 1410, a transceiver 1420, and a memory 1430. The processor 1410, the transceiver 1420, and the memory 1430 communicate with each other through an internal connection channel. The memory 1430 is configured to store instructions. The processor 1410 is configured to execute the instructions stored in the memory 1430, to control the transceiver 1420 to send a signal and/or receive a signal.

It should be understood that the communication apparatus 1400 may be specifically the network device or the terminal device in the foregoing embodiments, and may be configured to perform steps and/or procedures corresponding to the foregoing method embodiments. Optionally, the memory 1430 may include a read-only memory and a random access memory, and provide the instructions and data for the processor. A part of the memory may further include a non-volatile random access memory. For example, the memory may further store information of a device type. The processor 1410 may be configured to execute the instructions stored in the memory, and when the processor 1410 executes the instructions stored in the memory, the processor 1410 is configured to perform steps and/or procedures corresponding to the first device or the second device in the foregoing method embodiments. The transceiver 1420 may include a transmitter and a receiver. The transmitter may be configured to implement steps and/or procedures that correspond to the transceiver and that are used to perform a sending action. The receiver may be configured to implement steps and/or procedures that correspond to the transceiver and that are used to perform a receiving action.

It should be understood that, in this embodiment of this application, the processor of the foregoing apparatus may be a central processing unit (central processing unit, CPU). Alternatively, the processor may be another general-purpose processor, a digital signal processor (DSP), an application-specific integrated circuit (ASIC), a field programmable gate array (FPGA) or another programmable logic device, a discrete gate or a transistor logic device, a discrete hardware component, or the like. The general-purpose processor may be a microprocessor, or the processor may be any conventional processor or the like.

In an implementation process, steps in the foregoing methods can be implemented by using an integrated logical circuit of hardware in the processor, or by using instructions in a form of software. The steps of the methods disclosed with reference to embodiments of this application may be directly performed by a hardware processor, or may be performed by a combination of hardware and a software unit in the processor. A software unit may be located in a mature storage medium in the art, such as a random access memory, a flash memory, a read-only memory, a programmable read-only memory, an electrically erasable programmable memory, a register, or the like. The storage medium is located in the memory, and the processor reads the instructions in the memory and completes the steps in the foregoing methods in combination with hardware of the processor. To avoid repetition, details are not described herein again.

An embodiment of this application provides a readable computer storage medium. The readable computer storage medium is configured to store a computer program, and the computer program is used to implement the methods shown in the possible implementations in the foregoing embodiments.

An embodiment of this application provides a computer program product. The computer program product includes a computer program (which may also be referred to as code or instructions), and when the computer program runs on a computer, the computer may perform the methods shown in the foregoing embodiments.

An embodiment of this application provides a chip system. The chip system is configured to support the foregoing methods to implement functions shown in embodiments of this application.

A person of ordinary skill in the art may be aware that, in combination with examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a receiver, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
performing a first transmission in a first time period; and
performing a second transmission in a second time period, wherein the first transmission and the second transmission are performed on a same carrier of a same cell, a time interval between the first time period and the second time period is greater than or equal to a first duration threshold, and a configuration of a sub-band duplex mode in the first time period is different from a configuration of a sub-band duplex mode in the second time period.

2. The method according to claim 1, wherein the sub-band duplex mode is configured for the first time period, and the sub-band duplex mode is not configured for the second time period.

3. The method according to claim 1, wherein the sub-band duplex mode is configured for the first time period, the sub-band duplex mode is configured for the second time period, and sub-band information in the sub-band duplex mode in the first time period is different from sub-band information in the sub-band duplex mode in the second time period.

4. The method according to claim 3, wherein the sub-band information comprises a start location of a sub-band and/or a bandwidth of the sub-band.

5. The method according to any one of claims 1 to 4, wherein an active bandwidth part BWP of the first transmission is the same as an active BWP of the second transmission, and the first duration threshold is less than a BWP switch delay.

6. The method according to any one of claims 1 to 4, wherein an active bandwidth part BWP of the first transmission is different from an active BWP of the second transmission, and the first duration threshold is not less than a BWP switch delay.

7. The method according to any one of claims 1 to 6, wherein the first duration threshold is related to a capability of a terminal device, the first duration threshold is configured by a network side device, the first duration threshold is predefined, the first duration threshold is one orthogonal frequency division multiplexing OFDM symbol, the first duration threshold is two OFDM symbols, the first duration threshold is related to a subcarrier spacing, or the first duration threshold is equal to transition duration between an uplink and a downlink that are of a terminal device that does not support a full-duplex mode.

8. A communication method, wherein the method comprises:
performing a first transmission in a first time period;
performing a second transmission in a second time period, wherein the first transmission and the second transmission are performed on a same carrier of a same cell, a time interval between the first time period and the second time period is less than a first duration threshold, and a configuration of a sub-band duplex mode in the first time period is different from a configuration of a sub-band duplex mode in the second time period; and
discarding all or a part of data of the first transmission and/or all or a part of data of the second transmission.

9. The method according to claim 8, wherein total duration of the all or the part of data of the first transmission that is discarded and/or the all or the part of data of the second transmission that is discarded does not exceed the first duration threshold.

10. The method according to claim 8 or 9, further comprising:
determining, based on a transmission priority, to discard the all or the part of data of the first transmission and/or the all or the part of data of the second transmission.

11. The method according to claim 10, wherein a transmission with a higher transmission priority is preferentially performed, and a transmission with a lower transmission priority is preferentially discarded.

12. The method according to claim 10 or 11, wherein a step of determining the transmission priority comprises:
a transmission priority of a control channel is higher than a transmission priority of a data channel, wherein the control channel comprises at least one of a physical downlink control channel PDCCH and a physical uplink control channel PUCCH, and the data channel comprises at least one of a physical downlink shared channel PDSCH and a physical uplink shared channel PUSCH; or
a transmission priority of a dynamically scheduled channel or signal is higher than a transmission priority of a semi-statically configured channel or signal; a transmission priority of an uplink channel or signal is higher than a transmission priority of a downlink channel or signal; or a transmission priority of a demodulation reference signal DMRS is higher than a transmission priority of a data part.

13. The method according to any one of claims 8 to 12, further comprising:
if the discarded data of the first transmission or the second transmission comprises the DMRS, discarding the all data of the first transmission or the all data of the second transmission.

14. The method according to any one of claims 8 to 13, wherein the sub-band duplex mode is configured for the first time period, the sub-band duplex mode is not configured for the second time period, and a transmission priority of the first transmission is lower than a transmission priority of the second transmission.

15. The method according to any one of claims 1 to 14, wherein both the first transmission and the second transmission are uplink transmissions, both the first transmission and the second transmission are downlink transmissions, or the first transmission is an uplink/downlink transmission and the second transmission is a downlink transmission.

16. The method according to claim 15, wherein the uplink transmission comprises a transmission of any one of the following: a PDCCH, a PDSCH, a reference signal density CSI-RS, a single sideband SSB, and a DMRS, and/or the downlink transmission comprises a transmission of any one of the following: a PUCCH, a PUSCH, a physical random access channel PRACH, a channel sounding reference signal SRS, a phase tracking reference signal PTRS, and a DMRS.

17. A communication method, wherein the method comprises:
receiving or sending first information, wherein the first information indicates whether different transmissions of a first channel or signal can be separately performed in a first-type time unit and a second-type time unit, a sub-band duplex mode is configured for the first-type time unit, and the sub-band duplex mode is not configured for the second-type time unit.

18. The method according to claim 17, wherein the first information is carried in downlink control information DCI, a system information block SIB, radio resource control RRC signaling, or physical address control information MAC CE.

19. A communication apparatus, comprising a module configured to perform the method according to any one of claims 1 to 7, the method according to any one of claims 8 to 14, the method according to either of claims 15 and 16, or the method according to either of claims 17 and 18.

20. A communication apparatus, wherein the communication apparatus comprises a processor and a storage medium, the storage medium stores instructions, and when the instructions are run by the processor, the method according to any one of claims 1 to 7, the method according to any one of claims 8 to 14, the method according to either of claims 15 and 16, or the method according to either of claims 17 and 18 is implemented.

21. A computer-readable storage medium, wherein the computer-readable storage medium comprises instructions, and when the instructions are run by a processor, the method according to any one of claims 1 to 7, the method according to any one of claims 8 to 14, the method according to either of claims 15 and 16, or the method according to either of claims 17 and 18 is implemented.

22. A computer program product, wherein the computer program product comprises instructions, and when the instructions are run by a processor, the method according to any one of claims 1 to 7, the method according to any one of claims 8 to 14, the method according to either of claims 15 and 16, or the method according to either of claims 17 and 18 is implemented.
